# EUROPEAN PATENT APPLICATION

(11) **EP 4 527 892 A1**
(43) Date of publication of application: **26.03.2025**
(21) Application number: 23860005.0
(22) Date of filing: 10.08.2023
(51) Int. Cl.: C08L 75/08, B32B 27/12, B32B 27/40, C08G 18/00, C08G 18/10, C08K 3/01, C08K 3/04, D06N 3/14

(54) **URETHANE RESIN COMPOSITION**

(30) Priority: 30.08.2022 JP 2022136760
(71) Applicant: DIC Corporation, Tokyo 174-8520 (JP)
(72) Inventor: IGARASHI Hiroyuki, Komaki-shi, Aichi 485-0825 (JP); TAKEMURA Kiyoshi, Komaki-shi, Aichi 485-0825 (JP); UEGUCHI Miwa, Takaishi-shi, Osaka 592-0001 (JP); TETSUI Tomohiro, Takaishi-shi, Osaka 592-0001 (JP); MAEDA Ryo, Takaishi-shi, Osaka 592-0001 (JP)
(74) Representative: Kraus & Lederer PartGmbB
(86) International application number: PCT/JP2023/029248
(87) International publication number: WO 2024/048240

(57) **Abstract**

Provided is a urethane resin composition containing a urethane resin water dispersion and a colorant, which is capable of forming a film that does not cause problems of unpleasant odors and discoloration and, during film formation, does not cause the formation of cracks or the deterioration of mechanical properties such as tensile strength. The urethane resin composition contains (A) a urethane resin water dispersion having an oxyethylene structure and (B) a colorant containing a pigment, in which the value of [D50 of (B)/D50 of (A)], which is the ratio between the particle size (D50) of the urethane resin water dispersion (A) at a cumulative value of 50% in volume frequency particle size distribution measurement and the particle size (D50) of the colorant (B) at a cumulative value of 50% in volume frequency particle size distribution measurement, is 2/3 or less.

## Description

### TECHNICAL FIELD

The present invention relates to a urethane resin composition, and also to a laminate having a layer formed using the urethane resin composition.

### BACKGROUND ART

For their excellent mechanical strength and texture, urethane resins are widely used in the production of synthetic leather (including artificial leather), coating agents, adhesives, gloves, garments, and the like. Until now, the mainstream urethane resins have been solvent-based urethane resins containing N,N-dimethylformamide (DMF). However, against the backdrop of DMF regulations in Europe, strengthened VOC emission regulations in China and Taiwan, DMF regulations by major apparel manufacturers, etc., urethane resin water dispersions (polyurethane dispersions), which are obtained by dispersing urethane resins in water, have begun to be used for the above applications.

As a method for producing a urethane resin water dispersion, conventionally, a production method including steps in which an isocyanate group-containing urethane prepolymer is produced in a solvent such as acetone or methyl ethyl ketone, then the prepolymer is neutralized with an amine, water is added to cause phase inversion emulsification, and chain extension is performed, followed by desolvation, has been known (see, e.g., PTL 1). In a such conventional method, because an amine is used as a neutralizing agent, an unpleasant odor due to the residual amine has often been a problem. In addition, the residual amine is also said to be the cause of discoloration of urethane during long-term use.

In order to solve the above problems, a method for producing a urethane resin water dispersion, in which dispersion is performed with only a nonionic component without using a neutralizing amine, has been proposed (see, e.g., PTL 2).

### CITATION LIST

### PATENT LITERATURE

PTL 1: JP2018-48325A
PTL 2: JP6897883B

### SUMMARY OF INVENTION

### TECHNICAL PROBLEM

The production method described in PTL 2 can solve the problems of unpleasant odors and discoloration, and can further omit the desolvation step. In addition, the urethane resin water dispersion obtained by the production method described in PTL 2 can form a film with good drying properties, and thus the consumption of heat energy during film formation can be reduced. The production method described in PTL 2 can solve the problems in the production method that uses an amine as a neutralizing agent, and, moreover, can produce a urethane resin water dispersion having a high resin solids content.

However, the present inventors have confirmed that although the production method described in PTL 2 can form a film without any problems in terms of film-forming properties when the urethane resin water dispersion is dried alone, in the case where other components, such as a colorant containing a pigment, are added to the urethane resin water dispersion, the film-forming properties are not good. When film formation was attempted using the urethane resin water dispersion obtained by the production method described in PTL 2 having added thereto a colorant and the like, the formation of cracks or the deterioration of mechanical properties such as tensile strength was found here and there.

An object of the invention is to provide a urethane resin composition containing a urethane resin water dispersion and a colorant, which is capable of forming a film that does not cause problems of unpleasant odors and discoloration and, during film formation, does not cause the formation of cracks or the deterioration of mechanical properties such as tensile strength.

### SOLUTION TO PROBLEM

The present inventors have conducted extensive research to solve the above problems. As a result, they have found that the above problems can be solved by using a urethane resin composition containing a urethane resin water dispersion and a colorant, in which the ratio between the particle size of the urethane resin water dispersion and the particle size of the colorant is within a specific range, and thus accomplished the invention having the following gist.

That is, the invention encompasses the following aspects.
[1] A urethane resin composition including (A) a urethane resin water dispersion having an oxyethylene structure and (B) a colorant containing a pigment, in which
   the value of [D50 of (B)/D50 of (A)], which is the ratio between the particle size (D50) of the urethane resin water dispersion (A) at a cumulative value of 50% in volume frequency particle size distribution measurement and the particle size (D50) of the colorant (B) at a cumulative value of 50% in volume frequency particle size distribution measurement, is 2/3 or less.
[2] The urethane resin composition according to [1], in which the urethane resin water dispersion (A) contains, as essential raw materials, (a1) an isocyanate group-containing urethane prepolymer that is a reaction product of a polyol, a polyisocyanate, and a compound having an oxyethylene structure, (a2) water, and (a3) a chain extender.
[3] The urethane resin composition according to [1] or [2], in which the pigment is carbon black.
[4] The urethane resin composition according to [3], in which the carbon black has a volatile content of 1% or more.
[5] The urethane resin composition according to any of [1] to [4], in which the particle size (D50) of the colorant (B) at a cumulative value of 50% in volume frequency particle size distribution measurement is 180 nm or less, and the particle size (D95) of the colorant (B) at a cumulative value of 95% in volume frequency particle size distribution measurement is 350 nm or less.
[6] The urethane resin composition according to any of [1] to [5], in which the colorant (B) further contains a polymeric dispersant, and the polymeric dispersant has an acid value of 30 mgKOH/g or more and an amine value of 10 mgKOH/g or less.
[7] The urethane resin composition according to any of [1] to [6], in which a film formed using the urethane resin composition has a breaking strength (MD direction)/breaking strength (TD direction) ratio of 1.6 or less, and an elongation at break (MD direction)/elongation at break (TD direction) ratio of 1.2 or less.
[8] A laminate including a fibrous substrate and, on at least one side of the fibrous substrate, a skin layer formed from the urethane resin composition according to any of [1] to [7].
[9] The laminate according to [8], further including, on a surface of the skin layer, a surface treatment layer made using a surface treatment agent.
[10] The laminate according to [8] or [9], in which the fibrous substrate is in a form selected from the group consisting of a nonwoven fabric, a knitted fabric, and a woven fabric.

### ADVANTAGEOUS EFFECTS OF INVENTION

According to the invention, a urethane resin composition containing a urethane resin water dispersion and a colorant, which is capable of forming a film that does not cause problems of unpleasant odors and discoloration and, during film formation, does not cause the formation of cracks or the deterioration of mechanical properties such as tensile strength, can be provided.

### DESCRIPTION OF EMBODIMENTS

Hereinafter, the invention will be described in detail. Incidentally, the following descriptions of constituent elements are exemplary for explaining the invention, and the invention is not limited to their contents.

### (Urethane Resin Composition)

The urethane resin composition of the invention contains a urethane resin water dispersion (A) and a colorant (B).

The urethane resin water dispersion (A) has an oxyethylene structure.

The colorant (B) contains a pigment.

In the urethane resin composition of the invention, the value of [D50 of (B)/D50 of (A)], which is the ratio between the particle size (D50) of the urethane resin water dispersion (A) at a cumulative value of 50% in volume frequency particle size distribution measurement and the particle size (D50) of the colorant (B) at a cumulative value of 50% in volume frequency particle size distribution measurement, is 2/3 or less.

In addition to the urethane resin water dispersion (A) and colorant (B) described above, the urethane resin composition of the invention can further contain other components such as a leveling agent and an antifoaming agent.

### <Urethane Resin Water Dispersion (A)>

The urethane resin water dispersion (A) is a water dispersion of a urethane resin (X). For example, the content of urethane resin (X) in the water dispersion is preferably within a range of 50 to 70 mass%.

The urethane resin (X) is a general term for polymer compounds having a urethane bond (-NHCOO-), and is generally produced by the reaction (crosslinking/curing reaction) between a polyol and a polyisocyanate.

The urethane resin water dispersion (A) used in the invention has an oxyethylene structure.

It is preferable that the urethane resin water dispersion (A) according to the invention contains an isocyanate group-containing urethane prepolymer (a1), water (a2), and a chain extender (a3) as essential raw materials and is formed using these essential raw materials.

It is preferable that the urethane prepolymer (a1) is a reaction product of a polyol (a1-2), a polyisocyanate (a1-3), and a compound having an oxyethylene structure (a1-4).

In the invention, the content of urethane resin (X) is preferably within a range of 50 to 70 mass% as described above. When the so-called solids content in the water dispersion is high like this, the urethane resin water dispersion has improved drying properties, and thus cracking or the like does not occur in the urethane resin coating during drying and/or after drying, making it possible to obtain excellent film-forming properties. In addition, because the solids content is high, the amount of heat required for drying can be reduced. For the reason that even better film-forming properties can be obtained, the content of urethane resin (X) is more preferably within a range of 52 to 68 mass%, and still more preferably within a range of 54 to 65 mass%.

The urethane resin water dispersion (A) can be produced, for example, through steps of allowing a polyol (a1-2), a polyisocyanate (a1-3), and a compound having an oxyethylene structure (a1-4) to react to obtain an isocyanate group-containing urethane prepolymer (a1), next dispersing the urethane prepolymer (a1) in water (a2), and then allowing a chain extender (a3) to react to obtain a urethane resin (X). Incidentally, an emulsifier can be used when dispersing the urethane prepolymer in water (the method for producing the urethane resin water dispersion (A) will be described in detail later).

Hereinafter, each component, which is a raw material for producing the urethane resin water dispersion (A), will be described.

### <<Urethane Prepolymer (a1)>>

### <<<Polyol (a1-2)>>>

As the polyol (a1-2), for example, polyether polyol, polyester polyol, polyacrylic polyol, polycarbonate polyol, polybutadiene polyol, and the like can be used. These polyols may be used alone, and it is also possible to use two or more kinds together. Incidentally, as the polyol (a1-2), a polyol other than the raw material used as the compound having an oxyethylene structure (a1-4) described below is used.

From the viewpoint of mechanical strength of the resulting coating, the number average molecular weight of the polyol (a1-2) is preferably within a range of 500 to 100,000, and more preferably within a range of 800 to 10,000. Incidentally, the number average molecular weight of the polyol (a1-2) is a value measured by the gel permeation column chromatography (GPC) method.

For the reason that even better mechanical strength can be obtained, the proportion of the polyol (a1-2) used is more preferably 40 to 90 mass%, still more preferably 50 to 80 mass%, of the total mass of the raw materials constituting the urethane resin (X).

### <<<Polyisocyanate (a1-3)>>>

As the polyisocyanate (a1-3), for example, aromatic polyisocyanates such as phenylene diisocyanate, toluene diisocyanate, diphenylmethane diisocyanate, xylylene diisocyanate, naphthalene diisocyanate, polymethylene polyphenyl polyisocyanate, and carbodiimidized diphenylmethane polyisocyanate; aliphatic polyisocyanates or alicyclic polyisocyanates such as hexamethylene diisocyanate, lysine diisocyanate, cyclohexane diisocyanate, isophorone diisocyanate, dicyclohexylmethane diisocyanate, xylylene diisocyanate, tetramethylxylylene diisocyanate, dimer acid diisocyanate, and norbornene diisocyanate; and the like can be used. These polyisocyanates may be used alone, and it is also possible to use two or more kinds together.

For the reason that even better mechanical strength can be obtained, the proportion of the polyisocyanate (a1-3) used is more preferably within a range of 5 to 40 mass%, still more preferably within a range of 10 to 35 mass%, of the total mass of the raw materials constituting the urethane resin (X).

### <<<Compound Having Oxyethylene Structure (a1-4)>>>

As the compound having an oxyethylene structure (a1-4), for example, polyether polyols having an oxyethylene structure, such as polyethylene glycol, polyoxyethylene polyoxypropylene glycol, polyoxyethylene polyoxytetramethylene glycol, and polyethylene glycol dimethyl ether, can be used. These compounds may be used alone, and it is also possible to use two or more kinds together. Among them, for the reason that hydrophilicity can be controlled more easily, it is preferable to use polyethylene glycol and/or polyethylene glycol dimethyl ether.

For the reason that even better emulsifying properties and water dispersion stability can be obtained, the number average molecular weight of the compound having an oxyethylene structure (a1-4) is preferably within a range of 200 to 10,000, more preferably within a range of 300 to 3,000, and still more preferably within a range of 300 to 2,000. Incidentally, the number average molecular weight of the compound having an oxyethylene structure (a1-4) is a value measured by the gel permeation column chromatography (GPC) method.

For the reason that even better emulsifying properties, water dispersion stability, and film-forming properties can be obtained, the proportion of the compound having an oxyethylene structure (a1-4) used is preferably 5 mass% or less, more preferably 2 mass% or less, still more preferably within a range of 0.25 to 2 mass%, and particularly preferably within a range of 0.5 to 1.8 mass%, of the total mass of the raw materials constituting the urethane resin (X).

### <<Water (a2)>>

The water used in the invention may be ion exchange water, distilled water, or the like. These waters may be used alone, and it is also possible to use two or more kinds together.

### <<Chain Extender (a3)>>

As the chain extender (a3), those having a molecular weight of less than 500 (preferably within a range of 50 to 450) can be used. Specifically, chain extenders having a hydroxyl group, such as ethylene glycol, diethylene glycol, triethylene glycol, propylene glycol, dipropylene glycol, 1,3-propanediol, 1,3-butanediol, 1,4-butanediol, hexamethylene glycol, saccharose, methylene glycol, glycerin, sorbitol, bisphenol A, 4,4'-dihydroxydiphenyl, 4,4'-dihydroxydiphenyl ether, and trimethylolpropane; chain extenders having an amino group, such as ethylenediamine, 1,2-propanediamine, 1,6-hexamethylenediamine, piperazine, 2,5-dimethylpiperazine, isophoronediamine, 1,2-cyclohexanediamine, 1,3-cyclohexanediamine, 1,4-cyclohexanediamine, 4,4'-dicyclohexylmethanediamine, 3,3'-dimethyl-4,4'-dicyclohexylmethanediamine, 1,4-cyclohexanediamine, and hydrazine; and the like can be used. These chain extenders may be used alone, and it is also possible to use two or more kinds together. Incidentally, the molecular weight of the chain extender (a3) is a value calculated from the chemical formula.

As the chain extender (a3), it is preferable to use a chain extender having an amino group (hereinafter abbreviated as "amine-based chain extender") for the reason that the chain can be easily extended even at a relatively low temperature of 30°C or less, and thus energy consumption during the reaction can be suppressed, and also for the reason that even better mechanical strength and film-forming properties can be obtained as a result of urea group introduction. For the reason that even better emulsifying properties and water dispersion stability can be obtained even when the solids content of the urethane resin (X) is increased, it is more preferable to use an amine-based chain extender having a molecular weight within a range of 30 to 250, more preferably within a range of 40 to 250. Incidentally, in the case where two or more kinds of chain extenders are used together, the molecular weight described above indicates the average value thereof, and the average value should fall within the preferred molecular weight range described above.

For the reason that even better mechanical strength, film-forming properties, emulsifying properties, and water dispersion stability can be obtained, and also for the reason that the solids content of the urethane resin (X) can be increased even more easily, the proportion of the chain extender (a1) used is more preferably within a range of 0.1 to 30 mass%, particularly preferably 0.5 to 10 mass%, of the total mass of the raw materials constituting the urethane resin (X).

### <<Emulsifier>>

As the emulsifier that can be used for dispersing a urethane prepolymer in water to obtain a urethane resin, for example, nonionic emulsifiers such as polyoxyethylene nonylphenyl ether, polyoxyethylene lauryl ether, polyoxyethylene styryl phenyl ether, polyoxyethylene sorbitol tetraoleate, and polyethylene-polypropylene copolymers; anionic emulsifiers such as fatty acid salts such as sodium oleate, alkyl sulfate ester salts, alkylbenzene sulfonates, alkyl sulfosuccinates, naphthalene sulfonates, polyoxyethylene alkyl sulfates, sodium alkanesulfonates, and sodium alkyldiphenyl ether sulfonates; cationic emulsifiers such as alkylamine salts, alkyltrimethylammonium salts, and alkyldimethylbenzylammonium salts; and the like can be used. These emulsifiers may be used alone, and it is also possible to use two or more kinds together.

### <<Method for Producing Urethane Resin Water Dispersion (A)>>

As a method for producing the urethane resin water dispersion according to the invention, for example, a method in which the polyol (a1-2), the polyisocyanate (a1-3), and the compound having an oxyethylene group (a1-4) are allowed to react to obtain an isocyanate group-containing urethane prepolymer (a1) (hereinafter abbreviated as "prepolymer step"), the urethane prepolymer (a1) is next dispersed in the water (a2) (hereinafter, abbreviated as "emulsification step"), and then the chain extender (a3) is allowed to react to obtain a urethane resin (X) (hereinafter, abbreviated as "chain extension step"), thereby producing a urethane resin water dispersion, which is an water dispersion of the urethane resin (X), can be mentioned.

The prepolymer step can be performed in the absence of a solvent. In the conventional technology, the prepolymer step has generally been performed in an organic solvent such as methyl ethyl ketone or acetone, which requires a desolvation step to distill off the organic solvent after the emulsification step, taking several days of production time in actual production sites. In addition, it has also been difficult to completely remove the organic solvent in the desolvation step, and there often is some residual organic solvent, making it difficult to fully respond to environmental responsiveness. Meanwhile, in a method for producing the urethane resin water dispersion according to the invention, the prepolymer step can be performed in the absence of a solvent. As a result, a urethane resin water dispersion that is completely free of organic solvents can be obtained, and labor savings can also be achieved in its production steps.

For the reason that even better film-forming properties and mechanical strength can be obtained, the molar ratio between the total of the hydroxyl groups in the polyol (a1-2) and the hydroxyl groups in the compound having an oxyethylene group (a1-4) and the isocyanate groups in the polyisocyanate (a1-3) in the prepolymer step [isocyanate groups/hydroxyl groups] is preferably within a range of 1.1 to 3, and more preferably within a range of 1.2 to 2.

The reaction in the prepolymer step can be performed at 50 to 120°C for 1 to 10 hours, for example.

The prepolymer step can be performed by using a reaction vessel equipped with a stirring blade; a kneading machine such as a kneader, a continuous kneader, a taper roll, a single-screw extruder, a twin-screw extruder, a triple-screw extruder, a universal mixing machine, a plastomill, or a Votator kneading machine; a rotary dispersion mixing machine such as TK Homomixer, Filmix, Ebara Milder, Clearmix, Ultra Turrax, Cavitron, or Biomixer; an ultrasonic dispersion apparatus; an apparatus that has no moving parts and can perform mixing by the flow of the fluid itself, such as an in-line mixer; or the like.

The emulsification step is preferably performed at a temperature at which water does not evaporate, and a temperature within a range of 10 to 90°C can be mentioned, for example. The emulsification step can be performed using the same equipment as in the prepolymer step. Among them, it is preferable to use a kneading machine for the reason that a water dispersion of a urethane resin having the same level of average particle size as in the conventional method, in which the amount of oxyethylene groups introduced is small, and also a chain extender has reacted, can be obtained, and also for the reason that a urethane resin water dispersion having a high content of urethane resin can be easily obtained.

The chain extension step is a step of increasing the molecular weight of the urethane prepolymer (a1) by the reaction between the isocyanate groups in the urethane prepolymer (a1) and the chain extender (a3) to obtain a urethane resin (X). From the viewpoint of productivity, the chain extension step is preferably performed at a temperature of 50°C or less.

For the reason that even better film-forming properties and mechanical strength can be obtained, the molar ratio between the isocyanate groups in the urethane prepolymer (a1) and the total of the hydroxyl groups and amino groups in the chain extender (a3) [(hydroxyl groups and amino groups)/isocyanate groups] in the chain extension step is preferably within a range of 0.8 to 1.1, and more preferably within a range of 0.9 to 1.

The chain extension step can be performed using the same equipment as in the prepolymer step.

### <<Characteristics of Urethane Resin Water Dispersion (A)>>

In the invention, a urethane resin composition configured such that the value of [D50 of (B)/D50 of (A)], which is the ratio between the particle size (D50) of the urethane resin water dispersion (A) at a cumulative value of 50% in volume frequency particle size distribution measurement and the particle size (D50) of the colorant (B) at a cumulative value of 50% in volume frequency particle size distribution measurement, is 2/3 or less is specified.

When the average particle size (D50) ratio between the urethane resin water dispersion (A) and the colorant (B) [D50 of (B)/D50 of (A)] is within the above range, the difference in particle size distribution between the urethane resin and the colorant can be increased, and also the particle size of the colorant can be reduced. This is believed to suppress the formation of aggregates during film formation and make cracking less likely to occur, and thus is preferable.

D50 represents the particle size at which the cumulative value in volume frequency particle size distribution measurement is 50% (average particle size).

Thus, it is necessary to determine both the particle size (D50) of the urethane resin water dispersion (A) and the particle size (D50) of the colorant (B).

The particle size (D50) of the urethane resin water dispersion (A) is determined as follows (incidentally, the measurement of the particle size (D50) of the colorant (B) will be described later).

### <<<Measurement of Particle Size (D50) of Urethane Resin Water Dispersion (A) at Cumulative Value of 50% in Volume Frequency Particle Size Distribution Measurement>>>

Particle size distribution can be measured using a dynamic light scattering apparatus Nanotrac Wave II manufactured by MicrotracBEL Corp., from 1 g of the urethane resin water dispersion diluted with 50 g of water and pretreated at 2.5 A for 1 minute with an ultrasonic homogenizer (ULTRA HOMOGENIZER US-300E manufactured by Nihonseiki Kaisha, Ltd.).

For the reason that even better film-forming properties can be obtained, the particle size (D50) of the urethane resin water dispersion (A) is preferably within a range of 10 to 1,000 nm, and more preferably within a range of 50 to 500 nm.

The molecular weight of the urethane resin (X) varies depending on the application and performance requirements, but should be suitably selected such that the number average molecular weight is within a range of 5,000 to 50,000, preferably 5,000 to 15,000.

### <Colorant (B)>

The colorant (B) contains a pigment.

The colorant (B) is not particularly limited in form as long as it contains a pigment, and the colorant used may be a pigment alone or may also be a combination of a pigment with other components.

In the invention, it is preferable that the colorant (B) further contains a polymeric dispersant, and it is more preferable that the colorant is a pigment that has been surface-treated with a polymeric dispersant, for example.

The pigment contained in the colorant may be an inorganic pigment or an organic pigment.

In the invention, among inorganic pigments, it is more preferable to use carbon black.

As inorganic pigments other than carbon black, for example, oxides, hydroxides, sulfides, ferrocyanides, chromates, carbonates, silicates, phosphates, metal powders, and the like can be mentioned.

In addition, as organic pigments, nitrosos, dye lakes, azo lakes, insoluble azos, monoazos, disazos, condensed azos, benzimidazolones, phthalocyanines, anthraquinones, perylenes, quinacridones, dioxazines, isoindolines, azomethines, pyrrolopyrroles, and the like can be mentioned.

From the viewpoint of ensuring flexibility, a pigment having a small particle size is preferable.

From the viewpoint of exerting the effects of the invention, it is preferable that the pigment is carbon black, and it is particularly preferable that the carbon black has a volatile content of 1% or more.

When the volatile content of carbon black is as high as the above range, the amount of functional groups (OH or COOH) on the carbon black surface is large. This is believed to make it easier to maintain compatibility with the urethane resin during film formation and make particle aggregation less likely to occur, and thus is preferable.

Incidentally, the volatile content of carbon black refers to the amount of volatilization (weight loss) when heated at 950°C for 7 minutes, for example, and such a value can be found from the product catalog or the like.

The colorant (B) can be prepared by mixing and dispersing a pigment and a polymeric dispersant in an aqueous medium.

The polymeric dispersant is not particularly limited, and the polymer pigment dispersant described in JP2022-75758A, etc., can be used, for example.

More specifically, for example, as the polymeric dispersant, those described below can be favorably used.
(1) A comb-shaped polymer pigment dispersant having a pigment-affinic group in the main chain and/or a plurality of side chains and also having a plurality of side chains constituting the solvated moiety
(2) A polymer pigment dispersant having a plurality of pigment affinity moieties composed of pigment-affinic groups in the main chain
(3) A linear polymer pigment dispersant having a pigment affinity moiety composed of a pigment-affinic group at one end of the main chain

Here, the pigment-affinic group refers to a functional group that has a strong adsorptive power to the surface of a pigment. For example, a tertiary amino group, a quaternary ammonium group, a heterocyclic group having a basic nitrogen atom, a hydroxyl group, and a carboxyl group in organosols; a phenyl group, a lauryl group, a stearyl group, a dodecyl group, and an oleyl group in hydrosols; and the like can be mentioned.

The above polymer pigment dispersants may each be used alone, and it is also possible to use two or more kinds together.

Among polymeric dispersants, those having a certain degree of acid value are preferable from the viewpoint of ensuring affinity between the pigment and the urethane resin (X) in the dispersion liquid when the urethane resin water dispersion (A) and the colorant (B) are mixed and formed into a paint, and it is more preferable to use a polymeric dispersant in which the polymeric dispersant has an acid value of 30 mgKOH/g or more and an amine value of 10 mgKOH/g or less.

### <<Characteristics of Colorant (B)>>

The particle size (D50) of the colorant (B) is determined as follows.

### <<<Measurement of Particle Size (D50) of Colorant (B) at Cumulative Value of 50% in Volume Frequency Particle Size Distribution Measurement>>>

Particle size distribution can be measured using a dynamic light scattering apparatus Nanotrac Wave II manufactured by MicrotracBEL Corp., from 0.2 g of the colorant diluted with 50 g of water and pretreated at 2.5 A for 1 minute with an ultrasonic homogenizer (ULTRA HOMOGENIZER US-300E manufactured by Nihonseiki Kaisha, Ltd.).

It is preferable that the particle size (D50) of the colorant (B) is 180 nm or less. In addition, it is preferable that the particle size (D95) of the colorant (B) at a cumulative value of 95% in volume frequency particle size distribution measurement is 350 nm or less.

It is more preferable that the particle size (D50) of the colorant (B) is 180 nm or less, and the particle size (D95) of the colorant (B) is 350 nm or less.

When the 50% particle size (D50) and 95% particle size (D95) in the cumulative particle size distribution of the colorant (B) are within the above ranges, the particle size of the colorant can be prevented from becoming too large, and the formation of aggregates can be suppressed.

### <Mixing Ratio between Urethane Resin Water Dispersion (A) and Colorant (B)>

The amount of colorant (B) in the urethane resin composition is, per 100 parts by mass of the resin solids of the urethane resin (X) in the urethane resin water dispersion (A), preferably within a range of 10 to 40 parts by mass, and more preferably within a range of 10 to 20 parts by mass. When the amount of colorant (B) is equal to or less than the above upper limit, problems such as the deterioration of coating film strength and the formation of cracks due to an increase in the amount of particles in the coating film can be effectively prevented. In addition, when the amount of colorant (B) is equal to or more than the above lower limit, problems such as the deterioration of the color development or opacity of the coating film can be effectively prevented.

### <Other Components>

In addition to the urethane resin water dispersion (A) and colorant (B) described above, the urethane resin composition of the invention may further contain, as necessary, other components such as leveling agents, antifoaming agents, and thickeners within the range where the physical properties of the polyurethane resin obtained by curing are not impaired.

As other additives, for example, emulsifiers, neutralizing agents, thickeners, urethane catalysts, fillers, flame retardants, leveling agents, antiblocking agents, film-forming aids, antifoaming agents, foaming agents, and the like can be used. These additives may be used alone, and it is also possible to use two or more kinds together.

### <Application of Urethane Resin Composition>

Specific aspects in which the urethane resin composition is used will be described.

The urethane resin composition in the invention can be used, for example, as a coating agent for a fibrous substrate. A coating agent is an agent for obtaining a coating formed on the surface of a substrate, and the concept of surface treatment agents is encompassed. The surface of a fibrous substrate can be coated with a urethane resin composition to obtain a laminate having a layer composed of the urethane resin composition.

A layer composed of the urethane resin composition can be formed, for example, as a skin layer on the surface of a fibrous substrate. In addition, a layer composed of the urethane resin composition can be formed not only as a skin layer, but also as an adhesive layer or an intermediate layer.

It is also possible that a surface treatment layer made using a surface treatment agent is formed on the surface of a layer formed from the urethane resin composition to obtain a laminate having a skin layer and a surface treatment layer on the surface of the fibrous substrate.

A film formed using the urethane resin composition is a film that does not cause problems of unpleasant odors and discoloration and does not cause the formation of cracks or the deterioration of mechanical properties such as tensile strength. In addition, the film also shows good results in the evaluations of mechanical properties such as breaking strength and elongation at break. For example, a film formed using the urethane resin composition of the invention is a film that can show a breaking strength (MD direction)/breaking strength (TD direction) ratio of 1.6 or less and/or an elongation at break (MD direction)/elongation at break (TD direction) ratio of 1.2 or less.

### (Laminate Having Layer Formed Using Urethane Resin Composition)

The laminate of the invention has a layer formed using the urethane resin composition of the invention.

A layer formed using the urethane resin composition of the invention can be favorably used as a skin layer of a fibrous substrate. In addition, not only as a skin layer, the layer can also be favorably used as an adhesive layer, an intermediate layer, or a surface treatment layer on the surface of a skin layer.

In the laminate of the invention, a surface treatment layer made using a surface treatment agent may be further formed on the surface of the skin layer formed using the urethane resin composition of the invention described above.

As examples of materials for the fibrous substrate, for example, natural fibers (plant fibers, animal fibers) such as cotton, linen, and silk; and chemical fibers such as polyester, nylon, acrylic, and polyurethane can be mentioned.

As examples of the form of the fibrous substrate, for example, a knitted fabric, a woven fabric, a nonwoven fabric, and the like can be mentioned.

As specific examples of articles having the laminate in the invention, for example, synthetic leather, artificial leather, natural leather, automotive interior sheets using polyvinyl chloride (PVC) leather, sports shoes, garments, furniture, thermoplastic olefin (TPO) leather, dashboards, instrument panels, and the like can be mentioned.

The laminate in the invention can be produced by a known dry film-forming method or wet film-forming method. For example, as an example of the dry film-forming method, the following method can be mentioned.

A resin composition for skin layer is applied onto a release paper with a doctor knife, and then dried. Next, a resin composition for adhesive layer is applied onto the dried coating film of a skin layer with a doctor knife, and then pre-dried. Further, a nonwoven fabric is attached thereto, followed by drying. Subsequently, after aging, the release paper is peeled off, whereby a laminate is obtained.

In addition, for example, as an example of the wet film-forming method, the following method can be mentioned.

A urethane resin composition containing an organic solvent is applied to a substrate, and then the substrate is immersed in water. As a result, the solvent in the urethane resin composition is replaced with water, and solids in the urethane resin composition are precipitated to form a film. Next, the residual solvent is thoroughly washed out with water, followed by squeezing with a mangle roll or the like and then drying, whereby a laminate is obtained.

In the case where the laminate is produced by a wet film-forming method, a wet film-forming aid may be suitably blended with the urethane resin composition of the invention in order to adjust the film-forming speed and achieve good surface smoothness. As wet film-forming aids, for example, castor oil, glycerin-tripalmitate, silicone oil, and the like can be mentioned. These wet film-forming aids can be used alone, and it is also possible to use two or more kinds together.

The thickness of the layer made of the urethane resin composition is preferably within a range of 0.1 to 100 µm, for example.

### Examples

Hereinafter, the invention will be described in further detail with reference to examples, but the invention is not limited to these examples. In addition, in the compositions in the following examples, "%" means "mass%".

Information regarding the products used in the following examples and comparative examples is as follows.

### (Carbon Black)

#45 (manufactured by Mitsubishi Chemical Corporation, untreated carbon black, average particle size: 24 nm, volatile content: 1.1%)
MA7 (manufactured by Mitsubishi Chemical Corporation, oxidized carbon black, average particle size: 24 nm, volatile content: 2.5%)
MA100 (manufactured by Mitsubishi Chemical Corporation, oxidized carbon black, average particle size: 24 nm, volatile content: 1.5%)
#40 (manufactured by Mitsubishi Chemical Corporation, untreated carbon black, average particle size: 24 nm, volatile content: 0.8%)
#25 (manufactured by Mitsubishi Chemical Corporation, untreated carbon black, average particle size: 47 nm, volatile content: 0.6%)
#32 (manufactured by Mitsubishi Chemical Corporation, untreated carbon black, average particle size: 30 nm, volatile content: 0.6%)

The above carbon black volatile contents are the values given in the catalog. Incidentally, the catalog states that the volatile content refers to the amount of volatilization (weight loss) when heated at 950°C for 7 minutes.

### (Surfactant)

FLOWLEN GW-1500 (manufactured by Kyoeisha Chemical Co., Ltd., polymer dispersant with high affinity for pigments, solids content: 100%)

### (Leveling Agent)

BYK-348 (manufactured by BYK, polyether-modified polydimethylsiloxane, nonvolatile content: > 90%)

### (Antifoaming Agent)

TEGO Foamex 800 (manufactured by EVONIK, polyether siloxane copolymer, nonvolatile content: 25%)

### (Thickener)

Borchi Gel L75N, manufactured by Borchers, solids content: 50%

### (Production Example 1)

In the presence of 0.1 parts by mass of stannous octoate, 1,000 parts by mass of polycarbonate polyol (based on 1,6-hexanediol, number average molecular weight: 2,000), 38 parts by mass of polyethylene glycol ("PEG 600" manufactured by NOF Corporation, number average molecular weight: 600, hereinafter abbreviated as "PEG"), and 262 parts by mass of dicyclohexylmethane diisocyanate (HMDI) were allowed to react at 100°C until the NCO% reached 2.8%, thereby giving a urethane prepolymer.

The above urethane prepolymer heated to 70°C, 65 parts by mass of a 20% aqueous solution of an emulsifier sodium dodecylbenzenesulfonate ("NEOGEN S-20F" manufactured by DKS Co., Ltd.), and 948 parts by mass of water were stirred and mixed in a homomixer to obtain an emulsion. Immediately thereafter, a water dilution of isophoronediamine (IPDA) having an amino group content equivalent to the molar amount of the NCO groups was added to extend the chain, thereby giving a urethane resin water dispersion (A) having a final urethane resin content of 58 mass%.

The D50 of the urethane resin water dispersion (A) was measured as follows.

Particle size distribution was measured using a dynamic light scattering apparatus Nanotrac Wave II manufactured by MicrotracBEL Corp., from 1 g of the urethane resin water dispersion diluted with 50 g of water and pretreated at 2.5 A for 1 minute with an ultrasonic homogenizer (ULTRA HOMOGENIZER US-300E manufactured by Nihonseiki Kaisha, Ltd.). The results are shown in Tables 1-1 and 1-2 below.

### (Production Example 2)

In a four-neck flask equipped with a stirrer, a reflux condenser, a thermometer, and a nitrogen inlet tube, 1,000 parts by mass of polycarbonate polyol (based on 1,6-hexanediol, number average molecular weight: 2,000), 67 parts by mass of dimethylolpropionic acid, and 710 parts by mass of methyl ethyl ketone were added under nitrogen flow and uniformly mixed. Subsequently, 590 parts by mass of dicyclohexylmethane diisocyanate was added, 0.1 parts by mass of stannous octoate was next added, and the mixture was allowed to react at 70°C for about 4 hours to obtain a methyl ethyl ketone solution of a urethane prepolymer having isocyanate groups at the molecular terminals.

Next, 51 parts by mass of triethylamine was added to the methyl ethyl ketone solution of a urethane prepolymer obtained by the above method to neutralize the carboxyl groups in the urethane prepolymer, then 1,555 parts by mass of ion exchange water was added, and 128 parts by mass of isophoronediamine was next added and allowed to react. After the completion of the reaction, methyl ethyl ketone was distilled off under reduced pressure to obtain a 35 mass% urethane resin water dispersion (A').

The D50 of the urethane resin water dispersion (A') was measured as follows.

Particle size distribution was measured using a dynamic light scattering apparatus Nanotrac Wave II manufactured by MicrotracBEL Corp., from 1 g of the urethane resin water dispersion diluted with 50 g of water and pretreated at 2.5 A for 1 minute with an ultrasonic homogenizer (ULTRA HOMOGENIZER US-300E manufactured by Nihonseiki Kaisha, Ltd.). The results are shown in Tables 1-1 and 1-2 below.

### (Production Example 3)

A surfactant (12 parts by mass) was added to water (58 parts by mass) and stirred for 5 minutes in a homodisper, and #45 manufactured by Mitsubishi Chemical Corporation (30 parts by mass) was added with stirring and continuously stirred for 30 minutes. 100 g of the thus obtained blend and 100 g of 2 mmϕ glass beads were fed to a 220-cc glass bottle and dispersed for 120 minutes in a paint conditioner (PAINT SHAKER, manufactured by Toyo Seiki Co., Ltd.) to obtain an aqueous colorant (B-1).

The D50 and D95 of the colorant (B-1) were measured as follows.

Particle size distribution was measured using a dynamic light scattering apparatus Nanotrac Wave II manufactured by MicrotracBEL Corp., from 0.2 g of the colorant (B-1) diluted with 50 g of water and pretreated at 2.5 A for 1 minute with the same ultrasonic homogenizer as used for the above urethane resin water dispersion (ULTRA HOMOGENIZER US-300E manufactured by Nihonseiki Kaisha, Ltd.). The results are shown in Tables 1-1 and 1-2 below.

### (Production Examples 4 to 8)

Aqueous colorants (B-2) to (B-6) were obtained in the same manner as in Production Example 3, except that the ingredients in Production Example 3 were changed as shown in Table 2 below.

The D50 and D95 of the colorants (B-2) to (B-6) were also measured in the same manner as for the colorant (B-1). The results are shown in Tables 1-1 and 1-2 below.

### (Example 1)

10 g (10 parts by mass) of the aqueous colorant (B-1) was added to 100 g (100 parts by mass) of the urethane resin water dispersion (A) with stirring in a homodisper. Then, 0.1 g of a leveling agent and 0.1 g of an antifoaming agent were added, and a thickener was added to make the viscosity about 3,000 mPa-s. Subsequently, the mixture was stirred for 10 minutes to prepare an aqueous resin composition 1 for skin layer (in the tables, "aqueous resin composition for skin layer" is also referred to as "aqueous paint for skin").

### <Coating Film Evaluation>

### <<Coating Film Physical Properties>>

The aqueous resin composition 1 for skin layer was applied onto a release paper ("EK-100D" manufactured by Lintec Corporation) using a knife coater to a thickness of 100 µm, and then dried using a hot air dryer (70°C × 2 min → 120°C × 2 min). The obtained film was cut in the MD direction and also in the TD direction, preparing two kinds of test pieces each having a length of 100 mm and a width of 5 mm.

The test piece was sandwiched between chucks at each end and pulled at a crosshead speed of 300 mm/min (gauge distance: 20 mm, initial chuck distance: 20 mm) in an atmosphere having a temperature of 23°C and a humidity of 60% using a tensile testing machine "Autograph AG-I" (manufactured by Shimadzu Corporation) to measure the breaking strength and elongation at break at the time of breakage of the test piece.

### <<Crack Resistance>>

The aqueous resin composition 1 for skin layer was applied onto a release paper ("EK-100D" manufactured by Lintec Corporation) using a knife coater to a thickness of 150 µm, and then dried using a hot air dryer (70°C × 2 min → 120°C × 2 min), followed by evaluatation as follows.
A: Water dried up to form a coating, and the coating has no cracks.
B: Water did not dry up and/or cracks are observed in the coating.

### <<Flexibility>>

- In order to evaluate flexibility, synthetic leather to be evaluated was prepared as follows.
   - Preparation of Aqueous Paint for Adhesive Layer
      To 100 g (100 parts by mass) of Hydran WLA-515AR (manufactured by DIC CORPORATION), a thickener Borchi Gel 0626 (manufactured by Borchers) was added with stirring in a homodisper to make the viscosity about 6,000 mPa-s. Subsequently, 8 g (8 parts by mass) of a crosslinking agent BAYHYDUR XP2655 (manufactured by Covestro AG) was added and stirred for 10 minutes to prepare an aqueous paint for adhesive layer.
   - Preparation of Synthetic Leather

The aqueous resin composition 1 for skin layer was applied onto a release paper ("EK-100D" manufactured by Lintec Corporation) using a knife coater to a thickness of 150 µm, and then dried using a hot air dryer (70°C × 2 min → 120°C × 2 min). An aqueous paint for adhesive layer was applied onto the dried coating film using a knife coater to a thickness of 150 µm, and then dried using a hot air dryer (90 to 100°C × 3 minutes). Subsequently, the coated surface of the dried coating film was attached to a nonwoven fabric using a hot roll press set at 100 to 130°C to prepare synthetic leather.

### - Flexibility Evaluation

The obtained synthetic leather was subjected to a flexibility test using a flexometer ("Low-Temperature Flexometer" manufactured by Yasuda Seiki Co., Ltd.) (-10°C, 100 times/min) to measure the number of times until cracks appeared on the surface of the synthetic leather, followed by evaluation as follows.
A: 30,000 or more
B: 10,000 or more and less than 30,000
C: Less than 10,000

### <<Odor>>

The same synthetic leather as described in the above <<Flexibility>> section was prepared. The obtained synthetic leather was cut to a size of 200±20 cm², placed in a 1 L glass beaker, heated at 80±2°C for 2 hours, and then cooled to 60±5°C, and the odor was evaluated according to the following criteria.

At least three judges were selected. In the case where there was a difference of one or more grades in the scoring results of the judges, the test was repeated by at least five judges.

When the result is Grade 3 or less, such synthetic leather is considered acceptable for practical use.
Grade 1: No odor
Grade 2: Slight odor, but not disturbing odor
Grade 3: Obvious odor, but not disturbing odor
Grade 4: Disturbing odor
Grade 5: Strongly disturbing odor
Grade 6: Unacceptable odor

The results of the above evaluations performed using the aqueous resin composition 1 for skin layer of Example 1 are shown in Table 1-1 below.

### (Examples 2 to 3)

Aqueous resin compositions 2 to 3 for skin layer were obtained in the same manner as in Example 1, except that the ingredients in Example 1 were changed as shown in Table 1-1 below.

The aqueous resin compositions for skin layer were evaluated in the same manner as in Example 1. The evaluation results are shown in Table 1-1.

### (Comparative Examples 1 to 6)

Aqueous resin compositions 4 to 9 for skin layer were obtained in the same manner as in Example 1, except that the ingredients in Example 1 were changed as shown in Table 1-2 below.

The aqueous resin compositions for skin layer were evaluated in the same manner as in Example 1. The evaluation results are shown in Table 1-2.

**[Table 1-1]**

| | | | D50 | D95 | Volatile Content of Pigment [%] | Example 1 (Aqueous Paint 1 for Skin) | Example 2 (Aqueous Paint 2 for Skin) | Example 3 (Aqueous Paint 3 for Skin) |
|---|---|---|---|---|---|---|---|---|
| | Urethane Resin Water Dispersion (A) | Production Example 1 | 270.5 | | | 100 | 100 | 100 |
| | | Production Example 2 | 95.5 | | | | | |
| Resin Composition | Colorant (B) | Production Example 3 | 105 | 184 | 1.1 | 10 | | |
| | | Production Example 4 | 150 | 244 | 2.5 | | 10 | |
| | | Production Example 5 | 176 | 306 | 1.5 | | | 10 |
| | | Production Example 6 | 185 | 283 | 0.8 | | | |
| | | Production Example 7 | 220 | 374 | 0.6 | | | |
| | | Production Example 8 | 200 | 324 | 0.6 | | | |
| | | Leveling Agent | | | | 0.1 | 0.1 | 0.1 |
| | | Antifoaming Agent | | | | 0.1 | 0.1 | 0.1 |
| | | D50 Ratio [(B)/(A)] | | | | 0.39 | 0.55 | 0.65 |
| Evaluation of Film Physical Properties | | Breaking Strength in MD Direction (MPa) | | | | 44.7 | 43.1 | 47.3 |
| | | Breaking Strength in TD Direction (MPa) | | | | 29.5 | 39.4 | 37.9 |
| | | Breaking Strength MD/TD | | | | 1.52 | 1.09 | 1.25 |
| | | Elongation at Break in MD Direction (%) | | | | 370 | 380 | 385 |
| | | Elongation at Break in TD Direction (%) | | | | 328 | 354 | 357 |
| | | Elongation at Break MD/TD | | | | 1.13 | 1.07 | 1.08 |
| | | Cracking | | | | A | A | A |
| Evaluation of Synthetic Leather Physical Properties | | Flexibility | | | | A | A | A |
| | | Odor | | | | 2 | 2 | 2 |

**[Table 1-2]**

| | | | D50 | D95 | Volatile Content of Pigment [%] | Comparative Example 1 (Aqueous Paint 1 for Skin) | Comparative Example 2 (Aqueous Paint 2 for Skin) | Comparative Example 3 (Aqueous Paint 3 for Skin) | Comparative Example 4 (Aqueous Paint 1 for Skin) | Comparative Example 5 (Aqueous Paint 2 for Skin) | Comparative Example 6 (Aqueous Paint 3 for Skin) |
|---|---|---|---|---|---|---|---|---|---|---|---|
| | Urethane Resin Water Dispersion (A) | Production Example 1 | 270.5 | | | 100 | 100 | 100 | | | |
| | | Production Example 2 | 95.5 | | | | | | 100 | 100 | 100 |
| Resin Composition | Colorant (B) | Production Example 3 | 105 | 184 | 1.1 | | | | 10 | | |
| | | Production Example 4 | 150 | 244 | 2.5 | | | | | 10 | |
| | | Production Example 5 | 176 | 306 | 1.5 | | | | | | 10 |
| | | Production Example 6 | 185 | 283 | 0.8 | 10 | | | | | |
| | | Production Example 7 | 220 | 374 | 0.6 | | 10 | | | | |
| | | Production Example 8 | 200 | 324 | 0.6 | | | 10 | | | |
| | | Leveling Agent | | | | 0.1 | 0.1 | 0.1 | 0.1 | 0.1 | 0.1 |
| | | Antifoaming Agent | | | | 0.1 | 0.1 | 0.1 | 0.1 | 0.1 | 0.1 |
| D50 Ratio [(B)/(A)] | | | | | | 0.68 | 0.81 | 0.74 | 1.10 | 1.57 | 1.84 |
| Evaluation of Film Physical Properties | | Breaking Strength in MD Direction (MPa) | | | | 42.3 | 40.6 | 41.5 | 33.9 | 33.1 | 34.6 |
| | | Breaking Strength in TD Direction (MPa) | | | | 22.7 | 21.3 | 20.9 | 25.7 | 28.6 | 27.1 |
| | | Breaking Strength MD/TD | | | | 1.86 | 1.91 | 1.99 | 1.32 | 1.16 | 1.28 |
| | | Elongation at Break in MD Direction (%) | | | | 354 | 323 | 336 | 319 | 323 | 335 |
| | | Elongation at Break in TD Direction (%) | | | | 268 | 261 | 252 | 280 | 301 | 305 |
| | | Elongation at Break MD/TD | | | | 1.32 | 1.24 | 1.33 | 1.14 | 1.07 | 1.10 |
| | | Cracking | | | | B | B | B | A | A | A |
| Evaluation of Synthetic Leather Physical Properties | | Flexibility | | | | B | B | B | A | A | A |
| | | Odor | | | | 2 | 2 | 2 | 4 | 4 | 4 |

**[Table 2]**

| | | | Colorant (B) | | | | | |
|---|---|---|---|---|---|---|---|---|
| | Product Number | Volatile Content of Pigment [%] | Production Example 3 (Aqueous Colorant B-1) | Production Example 4 (Aqueous Colorant B-2) | Production Example 5 (Aqueous Colorant B-3) | Production Example 6 (Aqueous Colorant B-4) C | Production Example 7 (Aqueous olorant B-5) | Production Example 8 (Aqueous Colorant B-6) |
| Polymeric Dispersant (Surfactant) | FLOWLEN GW-1500 | | 12 | 12 | 12 | 12 | 12 | 12 |
| | #45 manufactured by Mitsubishi Chemical Corporation | 11 | 30 | | | | | |
| Pigment | MA7 manufactured by Mitsubishi Chemical Corporation | 2.5 | | 30 | | | | |
| | MA100 manufactured by Mitsubishi Chemical Corporation | 1.5 | | | 30 | | | |
| | #40 manufactured by Mitsubishi Chemical Corporation | 0.8 | | | | 30 | | |
| | #25 manufactured by Mitsubishi Chemical Corporation | 0.6 | | | | | 30 | |
| | #32 manufactured by Mitsubishi Chemical Corporation | 0.6 | | | | | | 30 |
| | Water | | 58 | 58 | 58 | 58 | 58 | 58 |

As shown in the examples, the urethane resin composition of the invention containing a urethane resin water dispersion and a colorant was found to be capable of forming a coating film having high strength in both MD/TD directions without cracking during coating film formation, making it possible to prepare synthetic leather having good flexibility. In addition, synthetic leather sheets using the urethane resin composition of the invention did not have any unpleasant odor (amine odor) either.

## Claims

1. A urethane resin composition comprising (A) a urethane resin water dispersion having an oxyethylene structure and (B) a colorant containing a pigment, wherein
the value of [D50 of (B)/D50 of (A)], which is the ratio between the particle size (D50) of the urethane resin water dispersion (A) at a cumulative value of 50% in volume frequency particle size distribution measurement and the particle size (D50) of the colorant (B) at a cumulative value of 50% in volume frequency particle size distribution measurement, is 2/3 or less.

2. The urethane resin composition according to claim 1, wherein the urethane resin water dispersion (A) contains, as essential raw materials, (a1) an isocyanate group-containing urethane prepolymer that is a reaction product of a polyol, a polyisocyanate, and a compound having an oxyethylene structure, (a2) water, and (a3) a chain extender.

3. The urethane resin composition according to claim 1, wherein the pigment is carbon black.

4. The urethane resin composition according to claim 3, wherein the carbon black has a volatile content of 1% or more.

5. The urethane resin composition according to claim 1, wherein the particle size (D50) of the colorant (B) at a cumulative value of 50% in volume frequency particle size distribution measurement is 180 nm or less, and the particle size (D95) of the colorant (B) at a cumulative value of 95% in volume frequency particle size distribution measurement is 350 nm or less.

6. The urethane resin composition according to claim 1, wherein the colorant (B) further contains a polymeric dispersant, and the polymeric dispersant has an acid value of 30 mgKOH/g or more and an amine value of 10 mgKOH/g or less.

7. The urethane resin composition according to claim 1, wherein a film formed using the urethane resin composition has a breaking strength (MD direction)/breaking strength (TD direction) ratio of 1.6 or less, and an elongation at break (MD direction)/elongation at break (TD direction) ratio of 1.2 or less.

8. A laminate comprising a fibrous substrate and, on at least one side of the fibrous substrate, a skin layer formed from the urethane resin composition according to any of claims 1 to 7.

9. The laminate according to claim 8, further comprising, on a surface of the skin layer, a surface treatment layer made using a surface treatment agent.

10. The laminate according to claim 8, wherein the fibrous substrate is in a form selected from the group consisting of a nonwoven fabric, a knitted fabric, and a woven fabric.
